(19) Europäisches Patentamt
European Patent Office
Office européen des brevets

(11) EP 4 521 143 A1

(12) **EUROPEAN PATENT APPLICATION**

(43) Date of publication:
**12.03.2025 Bulletin 2025/11**

(21) Application number: 23306507.7

(22) Date of filing: **11.09.2023**

(51) International Patent Classification (IPC):
**G01T 1/29** (2006.01)

(52) Cooperative Patent Classification (CPC):
**G01T 1/29; G01T 1/2985**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Centre National de la Recherche Scientifique**
**75016 Paris (FR)**
• **Université d'Aix Marseille**
**13007 Marseille (FR)**
• **Assistance Publique Hôpitaux de Marseille**
**13005 Marseille (FR)**

(72) Inventors:
• **MEHADJI, Brahim**
**07110 LARGENTIERE (FR)**
• **DUPONT, Mathieu**
**13009 MARSEILLE (FR)**
• **MONTROT, Adrien**
**13010 MARSEILLE (FR)**
• **FARMAN, Bardia**
**34520 PALAVAS-LES-FLOTS (FR)**
• **MOREL, Christian**
**13008 MARSEILLE (FR)**

(74) Representative: **LLR**
**2, rue Jean Lantier**
**75001 Paris (FR)**

(54) **SYSTEM FOR DETECTING GAMMA RAYS OR X-RAYS WITH IMPROVED COLLIMATION**

(57)     This method for detecting gamma rays or X-rays involves the use of a system for measuring gamma rays or X-rays (2) comprising:
- a first detector (4),
- a second detector (6) positioned behind the first detector (4), and
- a control unit (14) connected to the first and second detectors (4, 6) and configured to select events consisting of the detection of an ionizing particle in the first detector in coincidence with the detection of a particle in the second detector within 2 ns, the method comprising the step consisting of determining if an energy $E_1$ deposited by the ionizing particle in the first detector (4) is lower than the threshold energy value, or limit energy, $E_{lim}$.

[Fig. 1]

EP 4 521 143 A1

**Description**

The invention relates to the detection of gamma rays or X-rays. More precisely, the invention relates to a system for detecting gamma rays or X-rays and to a method for detecting gamma rays or X-rays involving the use of such a system.

In nuclear medicine, it is known to acquire data, like images, of internal structures or functions of a patient's body by using one or more gamma camera or X-ray camera detector heads to detect radiation emitted by a radiopharmaceutical that has been injected into the patient's body. A control unit controls the camera detector heads to acquire data and then processes the acquired data to generate images.

Existing gamma cameras commonly utilize a heavy lead collimator, a planar scintillation crystal, and a coarse array of bulky photomultiplier tubes. The collimator absorbs all incident gamma photons except those traveling in a specific direction at each cell in the collimator in order to reconstruct a meaningful planar image of an object located in a specific direction with respect to the camera. Collimators with different acceptance geometries are available but must be physically exchanged with a cumbersome transport mechanism capable of supporting their substantial weight.

A collimator drastically reduces the counting efficiency of the gamma camera. It adds great weight to the camera detector heads which, in turn, must be supported by a very heavy gantry. Exchanging collimators requires time and labor, thereby reducing patient throughput. The bulky exchange mechanism occupies a sizeable space and is subject to mechanical misalignment, thereby requiring service calls.

The document WO0188493A1 discloses a Compton deconvolution camera aiming to solve the aforementioned burdens by providing a system comprising a pair of detectors and a control unit configured to construct an image of an object based on data provided by the detectors. A collimation is performed by the means of the combination of the two detectors, thus allowing to remove the need of a collimator as mentioned above. However, the Compton deconvolution camera comes with new issues. Indeed, the construction of the image of the object is based on a deconvolution operation using the distribution of Compton scattered photons detected by the detectors. This deconvolution operation induces a heavy load on the control unit, meaning the control unit must be powerful enough to process this operation, which raises the cost of the system. In addition, the deconvolution operation may take some long time to process, such that the image is only rendered after a lap of time, which is inconvenient.

In the view of above, there exists a need for a system for detecting gamma rays or X-rays coming from a specific direction which is lightweight, easy to manipulate, and which does not involve a heavy load on the control unit like image construction of the Compton deconvolution camera.

To this end, it is provided according to the invention a method for detecting gamma rays or X-rays involving the use of a system for measuring gamma rays or X-rays comprising:

- a first detector, configured for detecting gamma rays or X-rays, having a first detecting surface oriented perpendicularly to a main axis of the system, the first detector having a width W,
- a second detector, configured for detecting gamma rays or X-rays, positioned behind the first detector at a distance D thereof, having a second detecting surface oriented perpendicularly to the main axis of the system, the second detector having a width equal to the width W of the first detector,
- a control unit connected to the first and second detectors and configured to select events consisting of the detection of an ionizing particle in the first detector in coincidence with the detection of a particle in the second detector within 2 ns, the method comprising the step consisting of determining if an energy $E_1$ deposited by the ionizing particle in the first detector is lower than a predetermined threshold energy value, or limit energy, $E_{lim}$.

The configuration of the system for detecting gamma rays or X-rays allows to have a double collimation along the main axis without needing a physical collimator. A geometrical collimation is obtained by the geometrical configuration of the first and second detectors, determined by the parameters formed by the width W and the distance D. An electronical collimation is obtained by the thresholding of the energy $E_1$. Indeed, an event as defined above results from a Compton scattering occurring at the first detecting surface, the angle of the Compton scattering being an increasing function of the energy $E_1$ deposited in the first detector. Thus, thresholding the energy $E_1$ is equivalent to thresholding the angle of the Compton scattering occurring at the first detecting surface considered by the control unit. The collimation of the system is thus obtained without the use of a bulky collimator similar to the one of the prior art previously discussed, making the system compact, lightweight and easy to manipulate.

In addition, the electronical collimation is realized with thresholding operations without the need of generating a Compton deconvolution image of the object in front of the system. It is thus understood that the invention needs far less calculations and mathematical operations from the control unit compared to the prior art document presented above. In other words, the invention puts less pressure on the control unit compared to the prior art document presented above, making it simpler to implement.

Advantageously, a limit angle $\theta_{lim}$, corresponding to the Compton scattering angle for a particle depositing an energy $E_{lim}$ in the first detector, is defined by the

following equation:

$$\theta_{lim} = \cos^{-1}\left(1 - \frac{E_{lim}}{E} \times \frac{mc^2}{E - E_{lim}}\right)$$

where E is the total energy of the gamma ray or the X-ray and $mc^2$ is equal to 511 keV, the limit energy $E_{lim}$ being determined so that $\theta_{lim}$ is lower than or equal to a predetermined angle value.

Thus, the electronical collimation can be accurately configured to only detect gamma rays or X-rays not departing to much from the main axis of the system.

Advantageously, the limit energy $E_{lim}$ is determined so that $\theta_{lim}$ is lower than 30°, preferably lower than 10°.

Advantageously, a max angle $\theta_{max}$, corresponding to the maximum angle measured from the main axis characterizing a particle passing through both the first and second detectors, is defined by the following equation:

$$\theta_{max} = \tan^{-1}\left(\frac{W}{D}\right)$$

the width W and the distance D being determined so that $\theta_{max}$ is lower than or equal to a predetermined angle value.

Thus, the geometrical collimation can be accurately configured to only detect gamma rays or X-rays not departing to much from the main axis of the system.

Advantageously, the width W and the distance D are determined so that the max angle $\theta_{max}$ is lower than 20°, preferably lower than 10°.

Preferably, the limit energy $E_{lim}$, the width W and the distance D are determined so that a collimation angle $\theta_{coll}$, defined as:

$$\theta_{coll} = \theta_{lim} + \theta_{max}$$

is lower than or equal to 40°, preferably lower than 20°.

Thus, the global collimation of the system can be accurately configured to only detect gamma rays or X-rays not departing to much from the main axis of the system.

It is also provided according to the invention a system for detecting gamma rays or X-rays, comprising:

- a first monolithic non-pixelated detector, configured for detecting gamma rays or X-rays, having a first detecting surface oriented perpendicularly to a main axis of the system, the first detector having a width W,
- a second monolithic non-pixelated detector, configured for detecting gamma rays or X-rays, positioned behind the first detector at a distance D thereof, having a second detecting surface oriented perpendicularly to the main axis of the system, the second detector having a width equal to the width W of the first detector,
- a control unit connected to the first and second detectors and configured to select events consisting of the detection of an ionizing particle in the first detector in coincidence with the detection of a particle in the second detector within 2 ns and configured to carry out a method for detecting gamma rays or X-rays as described above.

Advantageously, the system further comprises a collimation device wrapping at least the first and second detectors and having a collimation direction parallel to the main axis of the system.

The collimation device provides an optional third level of collimation, allowing an even more precise collimation of the system. Moreover, the collimation device serves as a housing for the system, making it easier to handle and manipulate the system.

Advantageously, the collimation device has the shape of a tube.

The collimation device is thus easy to conceive.

Preferably, the collimation device has a width which is less than 10 mm.

The collimation device is thus much less bulky than the collimation device of the prior art.

Advantageously, the system is a portable system weighing less than 1 kg, preferably less than 500 g.

The system is thus easy to handle, which allows it to be easily used by a human operator and moved around a source of gamma rays or X-rays.

**Brief description of the figures**

Other features and advantages would appear by reading the following description, given as an illustrative and non-restrictive example, and with the annexed drawings in which:

Figure 1 is a schematical view of a system for detecting gamma rays or X-rays according to an embodiment of the invention, and
Figure 2 is a drawing illustrating the collimation allowed by the system for detecting gamma rays or X-rays according to figure 1.

**Detailed description**

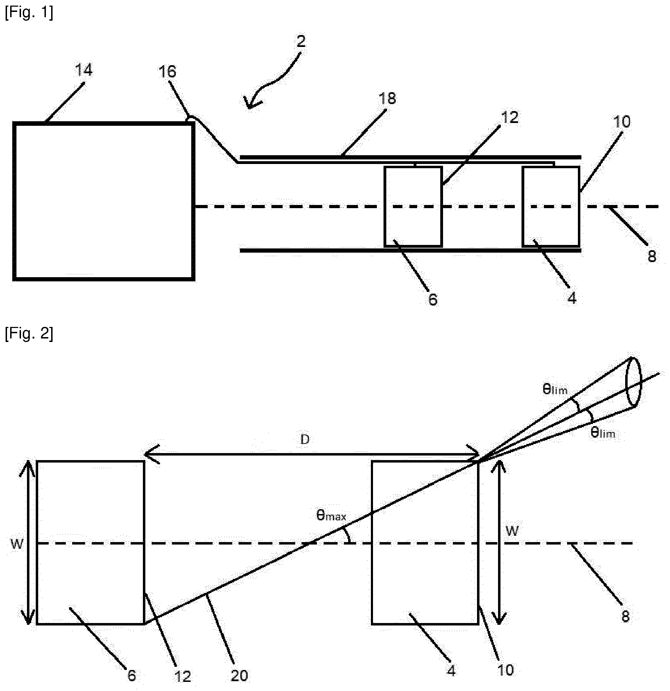

Figure 1 represents a system for detecting gamma rays or X-rays 2 according to an embodiment of the invention.

The system 2 comprises a first monolithic non-pixelated detector 4 and a second monolithic non-pixelated detector 6 which are configured for detecting gamma rays or X-rays. The first and second detectors 4, 6 are aligned along a main axis 8 of the system 2. The first detector 4 has a first detecting surface 10 oriented perpendicularly to the main axis 8 and the second detector has a second detecting surface 12 also oriented perpendicularly to the main axis 8, the second detector 8 being positioned behind the first detector 6 considering the direction of rays entering the system 2 from the first detecting surface.

The system 2 comprises a control unit 14 connected to the first and second detectors 4, 6. Here, the connexion is realized by the means of conductive wires 16, but according to a variant of the embodiment, the control unit 14 is connected to the first and second detectors 4, 6 by the means of a wireless protocol such that the conductive wires are not needed. The operation of the control unit 14 will be described at a later stage.

The system 2 comprises a collimation device 18 wrapping at least the first and second detectors 4, 6 and having a collimation direction parallel to the main axis 8 of the system 2. The collimation device 18 has the shape of a cylinder which generatrix is parallel to the main axis 8. In this particular embodiment, the collimation device has the general shape of a tube having a width which is less than 10 mm, here equal to 3.5 mm. The collimation device 18 is made of a material having a high gamma ray or X-ray absorption coefficient, for example tungsten, lead, molybdenum or a combination thereof. The function of the collimation device 18 will be described at a later stage.

The system 2 is a portable system in a sense that it can be easily used by a human operator and moved around a source of gamma rays or X-rays. The system 2 can be compared to a flashlight which can be easily manipulated with one hand. To this end, the system 2 weighs less than 1 kg, preferably less than 500 g.

Figure 2 shows the geometrical configuration of the first and second detectors 4, 6 within the system 2. The first and second detectors 4, 6 have a same width W and are spaced by a distance D defined by the distance separating the first detecting surface 10 from the second detecting surface 12 along the main axis 8. Given the configuration of the first and second detectors 4, 6, a ray 20, being a gamma ray or an X-ray, passing through both of the detectors 4, 6 has an angle $\theta$ with respect to the main axis 8 which is lower than or equal to a max angle $\theta_{max}$ defined by the following equation:

$$\theta_{max} = \tan^{-1}\left(\frac{W}{D}\right)$$

Here, the width W and the distance D are determined so that the max angle $\theta_{max}$ is lower than 20°, preferably lower than 10°. The value of the max angle $\theta_{max}$ can be lowered by increasing the value of the distance D, i.e. by further distancing the first detector 4 from the second detector 6.

The system 2 may be used to carry out a method for detecting gamma rays or X-rays which will now be described. An example of application of the invention is the detection of gamma rays or X-rays in medical surgery for the detection and ablation of tissues marked by a radioactive element, in which it is needed to detect the radiation in a specific direction, for which a collimation must be involved.

Here, an "event" refers to the detection of an ionizing particle in the first detector in coincidence with the detection of a particle in the second detector within a time frame of 2 ns. When an event is detected by the means of the detectors 4, 6 and the control unit 14, it is very likely that a Compton interaction has occurred in the first detector 4. The control unit 14 performs, continuously or at regular times intervals, the detection of such events.

If we note $E_1$ the energy deposited in the first detector 4 by a gamma ray or an X-ray, itself having an energy that we note E, then the angle of Compton scattering $\theta_C$ corresponding to the Compton interaction that has occurred in the first detector 4 is defined by the following equation:

$$\theta_C = \cos^{-1}\left(1 - \frac{E_1}{E} \times \frac{mc^2}{E - E_1}\right)$$

where $mc^2$ is equal to 511 keV.

The control unit 14 commands the first detector 4 so as to only select the events for which the energy deposited in the first detector $E_1$ is lower or equal to a predetermined level of energy, or limit energy, $E_{lim}$. Because the $\theta_C$ equation above is an increasing function of the energy $E_1$, this thresholding allows the system 2 to only consider the events for which the angle of Compton scattering $\theta_C$ is lower than or equal to a limit angle $\theta_{lim}$ defined by the following equation:

$$\theta_{lim} = \cos^{-1}\left(1 - \frac{E_{lim}}{E} \times \frac{mc^2}{E - E_{lim}}\right)$$

Here, the limit energy $E_{lim}$ is determined so that the limit angle $\theta_{lim}$ is lower than 30°, preferably lower than 10°.

Furthermore, for an event to actually occur, the gamma ray or X-ray must pass through both the first and second detectors 4, 6. Therefore, the incident ray must have an incident angle with respect to the main axis 8 of the system 2 which is lower than or equal to $\theta_{max}$, previously introduced, when propagating from the first detecting surface 10 to the second detecting surface 12.

By combining the thresholding performed by the control unit 14 and the geometrical condition for an event to occur, the system 2 only selects the gamma rays or X-ray having an incident angle with respect to the main axis 8 of the system 2 which is lower than or equal to a collimation angle $\theta_{coll}$ of the system 2 which is the sum of the max angle $\theta_{max}$ and the limit angle $\theta_{lim}$, i.e.:

$$\theta_{coll} = \theta_{max} + \theta_{lim}$$

Here, the limit energy $E_{lim}$, the width W and the distance D are determined so that the collimation angle $\theta_{coll}$ is lower than 40°, preferably lower than 20°. The collimation obtained by the system 2 is thus a combination of a geometrical collimation, obtained by the geometrical configuration of the first and second detectors 4,6, and an electronical collimation, obtained by the thresholding of the energy $E_1$ deposited in the first detector 4. In other words, the limit energy $E_{lim}$, the width W and the distance D are parameters of the system 2 which allows to calibrate the collimation, i.e. the collimation angle $\theta_{coll}$, obtained by the system 2. The system 2 is therefore calibrated to detect the gamma rays or X-rays coming from a source or object close to the main axis 8 of the system 2. It is understood that such sources can be selected by choosing the orientation of the main axis 8, i.e., by choosing the orientation of the system 2.

In addition, the collimation device 18 allows for a third level of collimation by blocking the gamma rays or X-rays coming from directions having an incident angle greater than the collimation angle $\theta_{coll}$, or even greater than the max angle $\theta_{max}$, so as to prevent the control unit 14 from processing useless data.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

The first monolithic non-pixelated detector may be replaced by a semi conductor. More generally, both the first and second detectors can be formed by either a direct conversion type of detector, i.e. semi conductor, or an indirect conversion type of detector, i.e. scintillators or plastics, pixelized or not.

**Numerical references**

  2: system for detecting gamma rays or X-rays
  4: first detector
  6: second detector
  8: main axis
  10: first detecting surface
  12: second detecting surface
  14: control unit
  16: conductive wires
  18: collimation device
  20: ray

**Claims**

1. Method for detecting gamma rays or X-rays involving the use of a system for measuring gamma rays or X-rays (2) comprising:

   - a first detector (4), configured for detecting gamma rays or X-rays, having a first detecting surface (10) oriented perpendicularly to a main axis (8) of the system (2), the first detector (4) having a width W,
   - a second detector (6), configured for detecting gamma rays or X-rays, positioned behind the first detector (4) at a distance D thereof, having a second detecting surface (12) oriented perpendicularly to the main axis (8) of the system (2), the second detector (6) having a width equal to the width W of the first detector (4),
   - a control unit (14) connected to the first and second detectors (4, 6) and configured to select events consisting of the detection of an ionizing particle in the first detector in coincidence with the detection of a particle in the second detector within 2 ns,

   the method comprising the step consisting of determining if an energy $E_1$ deposited by the ionizing particle in the first detector (4) is lower than a predetermined threshold energy value, or limit energy, $E_{lim}$.

2. Method for detecting gamma rays or X-rays according to the preceding claim, wherein a limit angle $\theta_{lim}$, corresponding to the Compton scattering angle for a particle depositing an energy $E_{lim}$ in the first detector (4), is defined by the following equation:

$$\theta_{lim} = \cos^{-1}\left( 1 - \frac{E_{lim}}{E} \times \frac{mc^2}{E - E_{lim}} \right)$$

   where E is the total energy of the gamma ray or the X-ray, $mc^2$ is equal to 511 keV, the process being **characterized in that** the limit energy $E_{lim}$ is determined so that the limit angle $\theta_{lim}$ is lower than or equal to a predetermined angle value.

3. Method for detecting gamma rays or X-rays according to the preceding claim, wherein the limit energy $E_{lim}$ is determined so that the limit angle $\theta_{lim}$ is lower than 30°, preferably lower than 10°.

4. Method for detecting gamma rays or X-rays according to any of the preceding claims, wherein a max angle $\theta_{max}$, corresponding to the maximum angle measured from the main axis (8) characterizing a particle passing through both the first and second detectors (4, 6), is defined by the following equation:

$$\theta_{max} = \tan^{-1}\left( \frac{W}{D} \right)$$

   the method being **characterized in that** the width W and the distance D are determined so that the max angle $\theta_{max}$ is lower than or equal to a predetermined angle value.

5. Method for detecting gamma rays or X-rays according to the preceding claim, wherein the width W and the distance D are determined so that the max angle $\theta_{max}$ is lower than 20°, preferably lower than 10°.

6. Method for detecting gamma rays or X-rays according to at least claims 2 and 4, wherein the limit energy $E_{lim}$, the width W and the distance D are determined so that a collimation angle $\theta_{call}$, defined as the sum of the max angle $\theta_{max}$ and the limit angle $\theta_{lim}$, is lower than or equal to 40°, preferably lower than 20°.

7. System for detecting gamma rays or X-rays (2), comprising:

   - a first monolithic non-pixelated detector (4), configured for detecting gamma rays or X-rays, having a first detecting surface (10) oriented perpendicularly to a main axis (8) of the system (2), the first detector (4) having a width W,
   - a second monolithic non-pixelated detector (4), configured for detecting gamma rays or X-rays, positioned behind the first detector (4) at a distance D thereof, having a second detecting surface (12) oriented perpendicularly to the main axis (8) of the system (2), the second detector (6) having a width equal to the width W of the first detector (4),
   - a control unit (14) connected to the first and second detectors (4, 6) and configured to select events consisting of the detection of an ionizing particle in the first detector (4) in coincidence with the detection of a particle in the second detector (6) within 2 ns and configured to carry out a method for detecting gamma rays or X-rays according to any of the preceding claims.

8. System for detecting gamma rays or X-rays (2) according to claim 7, further comprising a collimation device (18) wrapping at least the first and second detectors (4, 6) and having a collimation direction parallel to the main axis (8) of the system (2).

9. System for detecting gamma rays or X-rays (2) according to the preceding claim, wherein the collimation device (18) has the shape of a tube.

10. System for detecting gamma rays or X-rays (2) according to the preceding claim, wherein the collimation device (18) has a width which is less than 10 mm.

11. System for detecting gamma rays or X-rays (2) according to any of claims 7 to 10, wherein the system (2) is a portable system weighing less than 1 kg, preferably less than 500 g.

[Fig. 1]

[Fig. 2]

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. ILTIS ET AL: "Temporal Imaging CeBr 3 Compton Camera: A New Concept for Nuclear Decommissioning and Nuclear Waste Management", EPJ WEB OF CONFERENCES, vol. 170, 10 January 2018 (2018-01-10), pages 1-5, XP055544293, ISSN: 2101-6275, DOI: 10.1051/epjconf/201817006003 * II. Compton Camera Architecture * * IV. Timing Performance * * figures 1,2 * | 1-11 | INV. G01T1/29 |
| Y | US 2023/041293 A1 (PALM MARCUS [CH] ET AL) 9 February 2023 (2023-02-09) * paragraph [0151] * | 1-11 | |
| A | HMISSI M Z ET AL: "First images from a CeBr3 /LYSO:Ce Temporal Imaging portable Compton camera at 1.3 MeV", 2018 IEEE NUCLEAR SCIENCE SYMPOSIUM AND MEDICAL IMAGING CONFERENCE PROCEEDINGS (NSS/MIC), IEEE, 10 November 2018 (2018-11-10), pages 1-3, XP033612849, DOI: 10.1109/NSSMIC.2018.8824429 [retrieved on 2019-09-04] * II. Materials and Methods * | 1-11 | |
| A | US 2002/011571 A1 (LIN GREGORY SHARAT [US] ET AL) 31 January 2002 (2002-01-31) * paragraphs [0090] – [0093] * * figure 8 * | 1-11 | TECHNICAL FIELDS SEARCHED (IPC) G01T |

The present search report has been drawn up for all claims

| Place of search | Date of completion of the search | Examiner |
|---|---|---|
| The Hague | 29 January 2024 | Wulveryck, J |

EPO FORM 1503 03.82 (P04C01)

# EP 4 521 143 A1

## ANNEX TO THE EUROPEAN SEARCH REPORT
## ON EUROPEAN PATENT APPLICATION NO.

EP 23 30 6507

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | Publication date | Patent family member(s) | | Publication date |
|---|---|---|---|---|---|
| US 2023041293 | A1 | 09-02-2023 | AU | 2021205647 A1 | 04-08-2022 |
| | | | CN | 114930195 A | 19-08-2022 |
| | | | EP | 4088142 A2 | 16-11-2022 |
| | | | JP | 2023510803 A | 15-03-2023 |
| | | | US | 2023041293 A1 | 09-02-2023 |
| | | | WO | 2021140233 A2 | 15-07-2021 |
| US 2002011571 | A1 | 31-01-2002 | AU | 6119601 A | 26-11-2001 |
| | | | EP | 1330633 A1 | 30-07-2003 |
| | | | US | 2002011571 A1 | 31-01-2002 |
| | | | WO | 0188493 A1 | 22-11-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0188493 A1